# EUROPÄISCHE PATENTSCHRIFT

(11) **EP 2 037 160 B1**
(45) Veröffentlichungstag und Bekanntmachung des Hinweises auf die Patenterteilung: **05.12.2012**
(21) Anmeldenummer: 08163729.0
(22) Anmeldetag: 05.09.2008
(51) Int. Cl.: F16H 37/04, F16H 61/70, F16H 61/04

(54) **Verfahren zur Schaltsteuerung eines automatisierten Gruppengetriebes**
Method for controlling the switching of an automated group transmission
Procédé de commande de changement de vitesse d'une boîte de vitesse à plusieurs groupes automatisée

(30) Priorität: 15.09.2007 DE 102007043695
(43) Veröffentlichungstag der Anmeldung: 18.03.2009
(73) Patentinhaber: ZF Friedrichshafen AG, 88046 Friedrichshafen (DE)
(72) Erfinder: Bader, Josef, 88045 Friedrichshafen (DE); Graf, Andreas, 78333 Stockach - Wahlwies (DE); Miller, Martin, 88090 Immenstaad (DE); Steinborn, Mario, 88046 Friedrichshafen (DE); Hafen, Thomas, 88682 Salem (DE)

(56) Entgegenhaltungen:
- DE-A1-102004 055 857
- DE-A1-102005 002 496
- JP-A- 2001 263 472

## Beschreibung

Die Erfindung betrifft ein Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Gruppengetriebe mit einem mehrgängigen Hauptgetriebe und einer diesem antriebstechnisch vorgeschalteten Splitgruppe sowie einer dem Hauptgetriebe antriebstechnisch nachgeschalteten Bereichsgruppe sind seit längerem bekannt und kommen bevorzugt in Nutzfahrzeugen zur Anwendung. Durch eine zumeist zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine üblicherweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gesamtgetriebes in etwa verdoppelt und die Anzahl der insgesamt zur Verfügung stehenden Gänge des Gruppengetriebes nochmals verdoppelt. Hieraus ergibt sich in Verbindung mit einem dreistufigen Hauptgetriebe (mit drei Vorwärtsgangstufen und einer Rückwärtsgangstufe) ein 12-gängiges Gruppengetriebe mit insgesamt zwölf Vorwärtsgängen und maximal vier Rückwärtsgängen, und in Verbindung mit einem vierstufigen Hauptgetriebe mit vier Vorwärtsgangstufen und einer Rückwärtsgangstufe ein 16-gängiges Gruppengetriebe mit insgesamt sechzehn Vorwärtsgängen und maximal vier Rückwärtsgängen. Ein solches Gruppengetriebe weist gegenüber einem Einzelgetriebe mit einer vergleichbaren Anzahl von Gängen sowie ähnlicher Gangabstufung und Spreizung deutlich kompaktere Abmessungen und ein geringeres Gewicht auf. Da viele Schaltungen in einem Gruppengetriebe aber den Wechsel von Übersetzungsstufen in mehreren Teilgetrieben erfordern und somit relativ kompliziert ablaufen, sind die meisten bekannten Gruppengetriebe entweder teilautomatisiert oder vollautomatisiert schaltbar ausgebildet.

Ein Überblick über automatisierte Gruppengetriebe der Anmelderin ist in der Zeitschrift ATZ 9/2004 auf den Seiten 772 - 783 veröffentlicht. Aus der als AS-Tronic-Familie bezeichneten Baureihe automatisierter Schaltgetriebe sind die für mittelschwere Nutzfahrzeuge konzipierten Getriebe der AS-Tronic-mid-Baureihe und die für schwere Nutzfahrzeuge vorgesehenen Getriebe der AS-Tronic-Baureihe jeweils als Gruppengetriebe mit einem mehrstufigen, d.h. mit drei oder vier Vorwärtsstufen versehenen Hauptgetriebe, einer dem Hauptgetriebe vorgeschalteten zweistufigen Splitgruppe und einer dem Hauptgetriebe nachgeschalteten zweistufigen Bereichsgruppe ausgebildet. Das Hauptgetriebe ist jeweils in Vorgelegebauweise ausgeführt, mit unsynchronisierten Klauenkupplungen versehen, und weist im Fall der AS-Tronic-mid-Baureihe eine einzige Vorgelegewelle sowie im Fall der AS-Tronic-Baureihe aus Gründen der Gewichts- und Bauraumoptimierung zwei Vorgelegewellen auf. In beiden Baureihen ist das Hauptgetriebe wahlweise in einer Direktgangausführung (i_{HG_min} = 1) oder in einer Schnellgangausführung (i_{HG_min} < 1) verfügbar. Die Splitgruppe ist jeweils als ein Vorgelegegetriebe mit zwei schaltbaren Eingangskonstanten für das Hauptgetriebe ausgebildet. Die Bereichsgruppe ist jeweils als zweistufiges Planetengetriebe mit einer schaltbaren Direktverbindung (i_{GP} = 1) und einer alternativ schaltbaren hohen Übersetzung (i_{GP} >> 1) ausgeführt.

Ein Gruppengetriebe mit einem mehrstufigen Hauptgetriebe in Vorgelegebauweise, einer diesem vorgeschalteten Splitgruppe mit zwei schaltbaren Eingangskonstanten des Hauptgetriebes und einer dem Hauptgetriebe nachgeschalteten Bereichsgruppe in Planetenbauweise ist des weiteren aus der WO 1999/00612 A1 bekannt. Dieses bekannte Gruppengetriebe kann durch die Ausrüstung mit einem unterschiedlichen, eine Eingangskonstante des Hauptgetriebes bildenden Zahnradpaar wahlweise als ein Direktganggetriebe oder als ein Schnellganggetriebe ausgeführt werden. Eine dazu alternative Variante eines Gruppengetriebes mit einem zweistufigen Hauptgetriebe in Vorgelegebauweise (mit zwei Vorwärtsgangstufen und einer Rückwärtsgangstufe), einer diesem vorgeschalteten dreistufigen Splitgruppe und einer dem Hauptgetriebe nachgeschalteten Bereichsgruppe in Planetenbauweise ist in der EP 0 769 641 B1 beschrieben.

Bei den Gruppengetrieben der AS-Tronic-Baureihe und der AS-Tronic-mid-Baureihe sind bislang die jeweils in einem gemeinsamen Schaltpaket zusammengefassten Schaltkupplungen der Splitgruppe und der Bereichsgruppe synchronisiert ausgebildet, wogegen das Hauptgetriebe klauengeschaltet ausgeführt, das heißt mittels unsynchronisierter Klauenkupplungen schaltbar ist. Da die betreffenden synchronisierten Schaltkupplungen aber aufgrund eines komplizierten Aufbaus vergleichsweise teuer sind, einen relativ großen Bauraum erfordern und verschleißbedingt die Lebensdauer des gesamten Gruppengetriebes beschränken, könnte für zukünftige Ausführungen derartiger Gruppengetriebe vorgesehen werden, neben dem Hauptgetriebe auch die Bereichsgruppe klauengeschaltet auszuführen.

In einem derartigen Gruppengetriebe ist aufgrund der unsynchronisierten Ausführung der Bereichsgruppe ein spezieller Schaltungsablauf erforderlich, der sich deutlich von demjenigen eines weitgehend identischen, jedoch mit synchronisierter Bereichsgruppe versehenen Gruppengetriebes unterscheidet. Ein geeignetes Verfahren zur Schaltsteuerung eines Gruppengetriebes mit einer unsynchronisierten Bereichsgruppe wird beispielsweise in der DE 101 52 857 A1 vorgeschlagen. In diesem Verfahren ist im wesentlichen vorgesehen, dass bei einer Bereichsschaltung zunächst die Vorschaltgruppe und die Bereichsgruppe zur Unterbrechung des Kraftflusses jeweils in ihre Neutralstellung geschaltet werden, dass dann das Hauptgetriebe mittels einer Getriebebremse abgebremst wird, und dass anschließend eine Führung der Drehzahl des Antriebsmotors auf die Synchrondrehzahl des Zielgangs beginnt. Nach dem Schalten des Hauptgetriebes wird die Vorschaltgruppe synchronisiert in ihre Ziel-Übersetzungsstufe geschaltet. Mit Erreichen der Synchrondrehzahl durch den Antriebsmotor wird dann die Ziel-Übersetzungsstufe der Bereichsgruppe eingelegt.

Das Dokument DE 10 2005 002 496 A1, das als nächstliegender Stand der Technik angesehen wird, offenbart einen Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Nachteilig an diesem bekannten Verfahren ist allerdings, dass das Vorhandensein einer Vorschaltgruppe bzw. einer dem Hauptgetriebe vorgeschalteten Splitgruppe vorausgesetzt wird, und dass der Schaltungsablauf nur bei einer Bereichshochschaltung anwendbar ist sowie durch das vor dem Einlegen der Ziel-Übersetzungsstufe der Bereichsgruppe abzuwartende Erreichen der Synchrondrehzahl durch den Antriebsmotor verzögert wird.

Vor diesem Hintergrund liegt der vorliegenden Erfindung die Aufgabe zugrunde, ein verbessertes Verfahren zur Schaltsteuerung eines automatisierten Gruppengetriebes der eingangs genannten Art anzugeben, das gegenüber dem bekannten Verfahren einen schnelleren Schaltungsablauf ermöglicht und auch bei Gruppengetrieben anwendbar ist, die keine Vorschaltgruppe bzw. keine dem Hauptgetriebe vorgeschaltete Splitgruppe aufweisen.

Die Erfindung geht aus von einem Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe sowie eine diesem nachgeschaltete zweistufige Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe sowie die Bereichsgruppe jeweils über paarweise in einem gemeinsamen Schaltpaket mit zwei Schaltstellungen und einer Neutralstellung zusammengefasste unsynchronisierte Klauenkupplungen schaltbar sind, wobei bei einer Bereichsschaltung sowohl in dem Hauptgetriebe als auch in der Bereichsgruppe jeweils ein Wechsel zwischen zwei Übersetzungsstufen erfolgt.

Die Lösung der gestellten Aufgabe besteht darin, dass eine Bereichshochschaltung mit den folgenden Schritten durchgeführt wird:
- SH1): Lastabbau des Antriebsmotors,
- SH2a): Auslegen der Ist-Übersetzungsstufe L der Bereichsgruppe (GP = N) und
- SH2b): vollständiges Ausrücken der Trennkupplung (K = 0),
- SH3): Beginn der Steuerung des Antriebsmotors auf die Zieldrehzahl der Eingangswelle (W_{GE}),
- SH4): Synchronisieren der Eingangswelle (W_{GE}) auf die Zieldrehzahl durch eine Betätigung der Getriebebremse (Br > 0),
- SH5): Auslegen der Ist-Übersetzungsstufe des Hauptgetriebes (HG = N),
- SH6a): Einlegen der Ziel-Übersetzungsstufe des Hauptgetriebes (HG) und
- SH6b): Einlegen der Ziel-Übersetzungsstufe (S) der Bereichsgruppe (GP),
- SH7a): Vollständiges Einrücken der Trennkupplung (K = 1) und
- SH7b): Lastaufbau des Antriebsmotors.

Vorteilhafte und zweckmäßige Ausgestaltungen und Weiterbildungen des erfindungsgemäßen Verfahrens zur Steuerung einer Bereichshochschaltung sind Gegenstand der Ansprüche 2 bis 6.

Bei dem Verfahren gemäß der Erfindung wird demnach von einem automatisierten Gruppengetriebe ausgegangen, das in einem Antriebsstrang eines Kraftfahrzeugs zwischen einem Antriebsmotor und einem Achsantrieb angeordnet ist, und das mindestens ein mehrstufiges Hauptgetriebe HG, HG' und eine diesem nachgeschaltete zweistufige Bereichsgruppe GP umfasst. Das Hauptgetriebe HG, HG' ist, wie bei den bekannten Gruppengetrieben üblich, in Vorgelegebauweise ausgeführt und weist neben einer Eingangswelle W_{GE}, die über eine steuerbare Trennkupplung K mit dem Antriebsmotor in Verbindung steht, und einer Hauptwelle W_{H} mindestens eine mit einer steuerbaren Getriebebremse Br gekoppelte Vorgelegewelle W_{VG1}, W_{VG} auf. Das Hauptgetriebe HG, HG' und die Bereichsgruppe GP sind jeweils über paarweise in einem gemeinsamen Schaltpaket S1, S2, SP bzw. S1', S2', S3', SP mit zwei Schaltstellungen und einer Neutralstellung N zusammengefasste unsynchronisierte Klauenkupplungen schaltbar.

Bei einem derartigen Gruppengetriebe beinhaltet eine Bereichsschaltung bekanntlich sowohl in dem Hauptgetriebe HG, HG' als auch in der Bereichsgruppe GP jeweils einen Wechsel zwischen zwei Übersetzungsstufen. Bei einer Bereichshochschaltung wird das Hauptgetriebe HG, HG' von der höchsten Übersetzungsstufe G3, G4' in die niedrigste Übersetzungsstufe G1, G1' zurückgeschaltet und die Bereichsgruppe GP von der Langsamfahrstufe L in die Schnellfahrstufe S hochgeschaltet.

Damit dies bei akzeptablem Schaltkomfort möglichst schnell erfolgt, ist erfindungsgemäß vorgesehen, dass nach einem weitgehend erfolgten Lastabbau des Antriebsmotors (Verfahrensschritt SH1) zunächst die Ist-Übersetzungsstufe (Langsamfahrstufe L) der Bereichsgruppe GP ausgelegt (Verfahrensschritt SH2a), also die Bereichsgruppe GP in ihre Neutralstellung N geschaltet wird (GP = N), und dass in etwa zeitgleich die Trennkupplung K vollständig ausgerückt wird (Verfahrensschritt SH2b, K = 0). Danach beginnt die Steuerung des Antriebsmotors auf die Zieldrehzahl der Eingangswelle W_{GE} für die Gesamtübersetzung des Zielgangs (Verfahrensschritt SH3). Parallel dazu beginnt durch eine entsprechende Betätigung der Getriebebremse (Br > 0) die Synchronisierung der Eingangswelle W_{GE}, die über die Eingangskonstante (K1, K2 bzw. K0) mit der Vorgelegewelle (W_{VG1} bzw. W_{VG}) in Triebverbindung steht, auf die Zieldrehzahl im Zielgang am Ende der Schaltung (Verfahrensschritt SH4). Dann wird die Ist-Übersetzungsstufe (G3, G4') des Hauptgetriebes HG, HG' ausgelegt (Verfahrensschritt SH5), d.h. das Hauptgetriebe HG, HG' in Neutral geschaltet (HG = N bzw. HG' = N). Mit Erreichen der Zieldrehzahl durch die Eingangswelle W_{GE} wird die Getriebebremse Br gelöst und danach in etwa zeitgleich, versetzt oder nacheinander die Ziel-Übersetzungsstufe (G1, G1') des Hauptgetriebes HG, HG' und die Ziel-Übersetzungsstufe S der Bereichsgruppe GP unsynchronisiert eingelegt (Verfahrensschritte SH6a und SH6b), wobei die Drehzahlangleichung über die Kantenschrägen der Klauenkupplungen erfolgt. Dabei wird die beide Teilgetriebe HG, HG', GP verbindende Hauptwelle W_{H} durch das gleichzeitige Einlegen der betreffenden Schaltkupplungen S2, S2', SP entsprechend verzögert. Abschließend wird die Trennkupplung K vollständig eingerückt (Verfahrensschritt SH7a, K = 1), und es erfolgt der Lastaufbau des Antriebsmotors (Verfahrensschritt SH7b).

Das Verfahren gemäß der Erfindung ist in der vorbeschriebenen Form sowohl bei einem Gruppengetriebe ohne Vorschaltgruppe bzw. ohne vorgeschaltete Splitgruppe GV als auch bei einem Gruppengetriebe mit Vorschaltgruppe bzw. mit vorgeschalteter Splitgruppe GV, bei dem die Splitgruppe bei der Bereichshochschaltung nicht umgeschaltet wird, anwendbar.

Wenn, wie bei einem mehrstufigen Hauptgetriebe HG, HG' üblich, die niedrigste Übersetzungsstufe G1, G1' und die höchste Übersetzungsstufe G3, G4' unterschiedlichen Schaltpaketen S1, S2; S1', S2' bzw. Schaltgassen zugeordnet sind, ist bei der Bereichshochschaltung innerhalb des Hauptgetriebes HG, HG' zusätzlich ein Gassenwechsel, also eine Umschaltung des Hauptgetriebes HG, HG' auf die Schaltgasse der Ziel-Übersetzungsstufe erforderlich. Diese Umschaltung der Schaltgasse des Hauptgetriebes HG erfolgt bevorzugt unmittelbar nach dem Auslegen der Ist-Übersetzungsstufe G3, G4' des Hauptgetriebes HG, HG', also nach dem Verfahrensschritt SH5, und vor dem Einlegen der Ziel-Übersetzungsstufe G1, G1'; S des Hauptgetriebes HG, HG' und der Bereichsgruppe GP, d.h. vor den Verfahrensschritten SH6a und SH6b.

Wenn das Gruppengetriebe mit einer dem Hauptgetriebe HG vorgeschalteten, synchronisiert schaltbaren zweistufigen Vorschaltgruppe bzw. Splitgruppe GV versehen ist, und die Splitgruppe GV bei der Bereichshochschaltung ebenfalls umgeschaltet werden soll, so erfolgt diese Umschaltung der Splitgruppe GV zweckmäßig nach dem Auslegen der Ist-Übersetzungsstufe L der Bereichsgruppe GP in Verfahrensschritt SH2a und somit zeitgleich zum Beginn der Steuerung des Antriebsmotors auf die Zieldrehzahl der Eingangswelle W_{GE} in Verfahrensschritt SH3. Bei einer Rückschaltung innerhalb der Splitgruppe GV von der geringer übersetzten Eingangskonstante K2 in die höher übersetzte Eingangskonstante K1 führt dies zu einer Beschleunigung der Eingangswelle W_{GE}, die nachfolgend (in Verfahrensschritt SH4) durch den Einsatz der Getriebebremse Br wieder kompensiert wird.

Während des Lastabbaus des Antriebsmotors in dem ersten Verfahrensschritt SH1 wird die Trennkupplung K vorteilhaft schon teilweise bis oberhalb der Schlupfgrenze ausgerückt. Hierdurch kann die Trennkupplung K nachfolgend schneller geöffnet werden, da dann keine Wartezeit für die Vorbefüllung des Kupplungsstellers mit einem Druckmittel und für die Überbrückung eines Leerweges der Kupplungsstelleinrichtung mehr anfällt.

Wird beim Einlegen der Ziel-Übersetzungsstufen G1, G1'; S des Hauptgetriebes und/oder der Bereichsgruppe GP, also in den Verfahrensschritten SH6a oder SH6b, das Auftreten einer Zahn-auf-Zahn-Stellung an der betreffenden Klauenkupplung festgestellt, so wird der Schaltungsablauf unter Aufrechterhaltung der betreffenden Einrückungsstellkraft zweckmäßig fortgesetzt, da die Zahn-auf-Zahn-Stellung durch eine nachfolgend zwangsläufig auftretende Relativdrehung der betreffenden Getriebewellen (W_{VG1}, W_{H}; W_{VG}, W_{H}; W_{H}, W_{GA}) aufgehoben wird und die Klauenkupplung dann ohne eine Verzögerung des Schaltungsablaufs eingerückt werden kann.

Das Verfahren gemäß der Erfindung beruht im wesentlichen darauf, dass die klauengeschalteten Teilgetriebe des Gruppengetriebes, also das Hauptgetriebe HG, HG' und die diesem nachgeschaltete Bereichsgruppe GP, bei einer Bereichshochschaltung über die Getriebebremse Br nur grob synchronisiert werden, und dass die genaue Drehzahlanpassung der nach dem Lösen der Getriebebremse Br lastfrei rotierenden Getriebewellen W_{GE}, W_{VG1}, W_{VG2}, W_{VG}, W_{H}, W_{GA} über die Kantenschrägen der Klauenkupplungen der betreffenden Schaltpakete S2, S2', SP, also passiv erfolgt. Hieraus ergibt sich in Verbindung mit der gewählten Reihenfolge der Verfahrensschritte eine geringstmögliche Gesamtschaltzeit der Bereichshochschaltung bei akzeptablem Schaltkomfort.

Das Verfahren gemäß der Erfindung kann aber nicht nur, wie primär vorgesehen ist, bei einem Gruppengetriebe mit zwei klauengeschalteten Teilgetrieben HG, GP; HG', GP angewendet werden, sondern ist auch bei Gruppengetrieben anwendbar, die nur ein oder gar kein unsynchronisiertes Teilgetriebe aufweisen. Anders ausgedrückt sind alle genannten Verfahrensschritte auch bei Gruppengetrieben anwendbar, die zumindest ein synchronisiertes Teilgetriebe HG, GP; HG', GP aufweisen. Die Anwendung des erfindungsgemäßen Verfahrens dient in diesem Fall als Notverfahren und ist insbesondere bei Kälte, bei verschlissenen Synchronisierungen oder bei aus anderen Gründen auftretenden Schaltproblemen sinnvoll.

Zur Verdeutlichung der Erfindung ist der Beschreibung eine Zeichnung mit Ausführungsbeispielen beigefügt. In diesen zeigt
- Fig. 1: einen bevorzugten Ablauf einer Bereichshochschaltung nach dem erfindungsgemäßen Verfahren in Form eines vereinfachten Zeitdia- gramms,
- Fig. 2: den schematischen Aufbau eines ersten Gruppengetriebes zur An- wendung des erfindungsgemäßen Verfahrens, und
- Fig. 3: den schematischen Aufbau eines zweiten Gruppengetriebes zur An- wendung des erfindungsgemäßen Verfahrens.

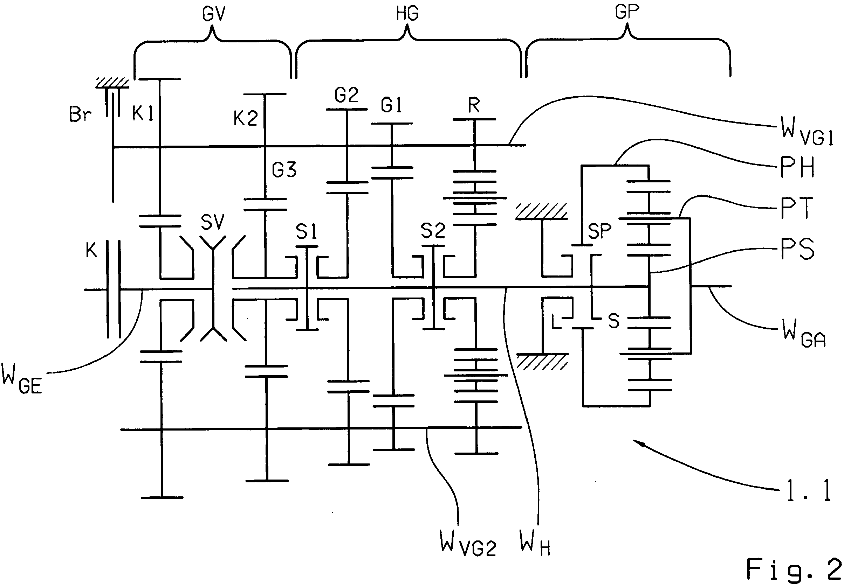

In Fig. 2 ist ein Gruppengetriebe 1.1 dargestellt, bei dem das erfindungsgemäße Verfahren anwendbar ist. Das Gruppengetriebe 1.1 umfasst ein Hauptgetriebe HG, eine diesem antriebstechnisch vorgeschaltete Vorschaltgruppe GV, und eine dem Hauptgetriebe HG antriebstechnisch nachgeschaltete bzw. nachgeordnete Bereichsgruppe GP und entspricht in seinem funktionstechnischen Aufbau einer Ausführungsform eines an sich bekannten Gruppengetriebes der AS-Tronic-Baureihe.

Das Hauptgetriebe HG ist als Direktganggetriebe in Vorgelegebauweise ausgeführt und weist eine Hauptwelle W_{H} sowie zwei Vorgelegewellen W_{VG1} und W_{VG2} auf, wobei die erste Vorgelegewelle W_{VG1} mit einer steuerbaren Getriebebremse Br gekoppelt ist. Das Hauptgetriebe HG ist mit drei Übersetzungsstufen G1, G2, G3 für die Vorwärtsfahrt und einer Übersetzungsstufe R für die Rückwärtsfahrt dreistufig ausgebildet. Die Losräder der Übersetzungsstufen G1, G2, R sind jeweils drehbar auf der Hauptwelle W_{H} gelagert und über zugeordnete Klauenkupplungen schaltbar. Die zugeordneten Festräder sind drehfest auf den Vorgelegewellen W_{VG1}, W_{VG2} angeordnet. Die als Direktgang ausgebildete höchste Übersetzungsstufe G3 ist über eine Direktschaltkupplung schaltbar. Die Schaltkupplungen der Übersetzungsstufen G3, G2 sowie die Schaltkupplungen der Übersetzungsstufen G1, R sind jeweils in einem gemeinsamen Schaltpaket S1, S2 zusammengefasst.

Die Vorschaltgruppe GV ist zweistufig ausgebildet und ebenfalls in Vorgelegebauweise ausgeführt, wobei die beiden Übersetzungsstufen K1, K2 der Vorschaltgruppe GV zwei schaltbare Eingangskonstanten des Hauptgetriebes HG mit einer Übersetzung i_{GV} bilden. Durch eine geringe Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, als Verbrennungsmotor ausgebildeten Antriebsmotor in Verbindung steht. Das Losrad der zweiten Übersetzungsstufe K2 ist drehbar auf der Hauptwelle W_{H} gelagert. Die Festräder beider Übersetzungsstufen K1, K2 sind jeweils drehfest auf den eingangsseitig verlängerten Vorgelegewellen W_{VG1}, W_{VG2} des Hauptgetriebes HG angeordnet. Die synchronisiert ausgebildeten Schaltkupplungen der Vorschaltgruppe GV sind in einem gemeinsamen Schaltpaket SV zusammengefasst.

Die nachgeschaltete Bereichsgruppe GP ist ebenfalls zweistufig ausgebildet, jedoch in Planetenbauweise mit einem einfachen Planetenradsatz ausgeführt. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes GP verbunden. Das Hohlrad PH steht mit einem Schaltpaket SP mit zwei Schaltkupplungen in Verbindung, durch welche die Bereichsgruppe GP wechselweise durch die Verbindung des Hohlrades PH mit einem feststehenden Gehäuseteil in eine Langsamfahrstufe L und durch die Verbindung des Hohlrades PH mit der Hauptwelle W_{H} bzw. dem Sonnenrad PS in eine Schnellfahrstufe S schaltbar ist. Im Gegensatz zur bisherigen Ausführung der AS-Tronic-Getriebe sind die Schaltkupplungen des Schaltpakets SP vorliegend unsynchronisiert ausgebildet.

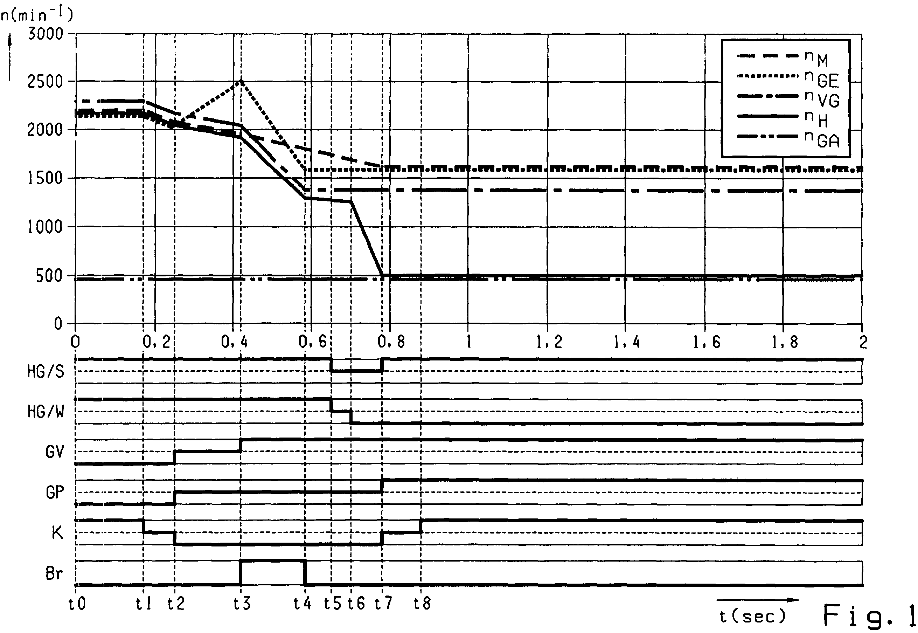

Nachfolgend wird ein erfindungsgemäßer Ablauf einer bei dem Gruppengetriebe 1.1 nach Fig. 2 durchgeführten Bereichshochschaltung anhand der Diagramme von Fig. 1 erläutert. Im oberen Teil von Fig. 1 sind die Zeitverläufe der Drehzahl n_{M} des Antriebsmotors, der Drehzahl n_{GE} der Eingangswelle W_{GE}, der Drehzahl n_{VG} der ersten Vorgelegewelle W_{VG1}, der Drehzahl n_{H} der Hauptwelle W_{H} und der Drehzahl n_{GA} der Ausgangswelle W_{GA} abgebildet.

Im unteren Teil von Fig. 1 sind schematisch die Betätigungsvorgänge der Getriebeelemente dargestellt, unter der Bezeichnung HG/S Schaltvorgänge innerhalb des Hauptgetriebes HG, also das Auslegen der Ist-Übersetzungsstufe G3 und das Einlegen der Ziel-Übersetzungsstufe G1, unter der Bezeichnung HG/W Wählvorgänge innerhalb des Hauptgetriebes HG, d.h. das Wechseln der Schaltgasse bzw. der Schaltpakete von S1 zu S2, unter der Bezeichnung GV Schaltvorgänge innerhalb der Splitgruppe GV, also das Umschalten der Übersetzungsstufen von K2 zu K1, unter der Bezeichnung GP Schaltvorgänge innerhalb der Bereichsgruppe GP, d.h. das Auslegen der Ist-Übersetzungsstufe L und das Einlegen der Ziel-Übersetzungsstufe S, unter der Bezeichnung K eine Betätigung bzw. das Einrücken der Trennkupplung K, und unter der Bezeichnung Br eine Betätigung bzw. das Schließen der Getriebebremse Br.

Zum Zeitpunkt t0 beginnt der Lastabbau an dem Antriebsmotor, der spätestens zum Zeitpunkt t2 abgeschlossen ist. Parallel dazu wird beginnend im Zeitpunkt t1 die Trennkupplung K vorgeöffnet, also bis oberhalb der Schlupfgrenze ausgerückt. Zum Zeitpunkt t2 wird zunächst die Ist-Übersetzungsstufe L der Bereichsgruppe GP ausgelegt, also die Bereichsgruppe GP in den Leerlauf N geschaltet (GP = N), und in etwa zeitgleich die Trennkupplung K vollständig ausgerückt (K = 0).

Unmittelbar danach beginnen die synchronisierte Umschaltung der Splitgruppe GV von der Ist-Übersetzungsstufe K2 in die Ziel-Übersetzungsstufe K1 und die Steuerung des Antriebsmotors auf die Zieldrehzahl der Eingangswelle W_{GE} für die Gesamtübersetzung des Zielgangs. Zwischen dem Zeitpunkt t3 und dem Zeitpunkt t4 wird durch eine entsprechende Betätigung der Getriebebremse Br die Eingangswelle W_{GE} auf die Zieldrehzahl der Gesamtübersetzung des Zielgangs synchronisiert.

Anschließend wird im Zeitpunkt t5 die Ist-Übersetzungsstufe G3 des Hauptgetriebes HG ausgelegt und nachfolgend bis zum Zeitpunkt t6 das Hauptgetriebe HG auf die Schaltgasse des Ziel-Übersetzungsstufe G1 umgeschaltet. Danach werden im Zeitpunkt t7 die Ziel-Übersetzungsstufe G1 des Hauptgetriebes HG und in etwa zeitgleich die Ziel-Übersetzungsstufe S der Bereichsgruppe GP unsynchronisiert eingelegt. Abschließend wird die Trennkupplung K zwischen den Zeitpunkten t7 und t8 wieder vollständig eingerückt, bevor der Lastaufbau des Antriebsmotors erfolgt.

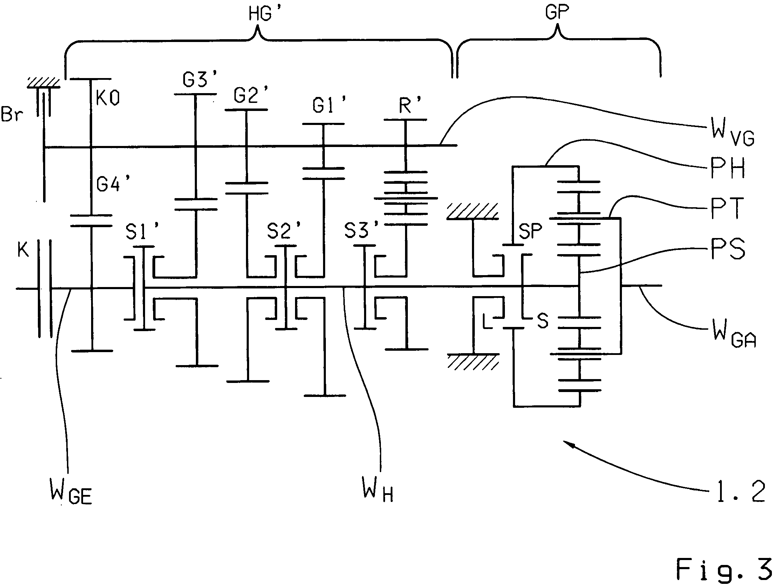

Ein weiteres Gruppengetriebe 1.2, bei dem das erfindungsgemäße Verfahren zur Anwendung kommen kann, ist in Fig. 3 abgebildet. Dieses Gruppengetriebe 1.2 umfasst ein Hauptgetriebe HG' und eine diesem nachgeschaltete Bereichsgruppe GP und entspricht in seinem geometrischen Aufbau einer Ausführungsform eines bekannten Gruppengetriebes für leichte Nutzfahrzeuge.

Das Hauptgetriebe HG' ist als Direktganggetriebe in Vorgelegebauweise ausgeführt und weist eine Eingangswelle W_{GE}, eine Hauptwelle W_{H} und eine Vorgelegewelle W_{VG} auf, wobei die Vorgelegewelle W_{VG} mit einer steuerbaren Getriebebremse Br versehen ist. Die Eingangswelle W_{GE} steht eingangsseitig über eine steuerbare Trennkupplung K mit einem nicht abgebildeten Antriebsmotor in Verbindung und ausgangsseitig über ein eine Eingangskonstante K0 bildendes Zahnradpaar permanent mit der Vorgelegewelle W_{VG} in Triebverbindung. Das Hauptgetriebe HG' ist mit vier Übersetzungsstufen G1' - G4' für die Vorwärtsfahrt und einer Übersetzungsstufe R' für die Rückwärtsfahrt vierstufig ausgebildet. Die Losräder der Übersetzungsstufen G1', G2', G3', R' sind jeweils drehbar auf der Hauptwelle W_{H} gelagert und über zugeordnete Klauenkupplungen schaltbar. Die zugeordneten Festräder sind drehfest auf der Vorgelegewelle W_{VG} angeordnet. Die als Direktgang ausgebildete höchste Übersetzungsstufe G4' ist über eine Direktschaltkupplung schaltbar. Die Schaltkupplungen der Übersetzungsstufen G4', G3' sowie die Schaltkupplungen der Übersetzungsstufen G2', G1' sind jeweils in einem gemeinsamen Schaltpaket S1', S2' zusammengefasst. Ein drittes Schaltpaket S3' weist nur die Schaltkupplung der Übersetzungsstufe für die Rückwärtsfahrt R' auf. Die nachgeschaltete Bereichsgruppe GP entspricht in Aufbau und Wirkungsweise der Bereichsgruppe GP des Gruppengetriebes 1.1 nach Fig. 2.

Der zuvor anhand von Fig. 1 beschriebene Verfahrensablauf zur Durchführung einer Bereichshochschaltung ist bei dem Gruppengetriebe 1.2 identisch anwendbar, wenn der Verfahrensschritt, der das Umschalten der Splitgruppe GV betrifft, weggelassen wird, und wenn anstelle der Bezeichnungen für das Hauptgetriebe HG und dessen Vorgelegewelle W_{VG1} sowie die betreffenden Schaltpakete S1, S2 und Übersetzungsstufen G1, G3 gemäß Fig. 2 nunmehr die Bezeichnungen für das Hauptgetriebe HG' und dessen Vorgelegewelle W_{VG} sowie die betreffenden Schaltpakete S1', S2' und Übersetzungsstufen G1', G4' gemäß Fig. 3 verwendet werden. Auf eine Wiederholung dieser bereits genannten Verfahrensschritte kann daher verzichtet werden.

### Bezugszeichen

- 1.1: Gruppengetriebe
- 1.2: Gruppengetriebe
- Br: Getriebebremse
- GP: Bereichsgruppe
- GV: Splitgruppe, Vorschaltgruppe
- G1: Erste Übersetzungsstufe von HG
- G1': Erste Übersetzungsstufe von HG'
- G2: Zweite Übersetzungsstufe von HG
- G2': Zweite Übersetzungsstufe von HG'
- G3: Dritte Übersetzungsstufe von HG
- G3': Dritte Übersetzungsstufe von HG'
- G4': Vierte Übersetzungsstufe von HG'
- HG: Hauptgetriebe
- HG': Hauptgetriebe
- HG/S: Schaltvorgang in HG
- HG/W: Wählvorgang in HG
- i_{GV}: Übersetzung von GV
- i_{GP}: Übersetzung von GP
- i_{HG}: Übersetzung von HG
- K: Trennkupplung
- K0: Eingangskonstante von HG'
- K1: Erste Übersetzungsstufe von GV
- K2: Zweite Übersetzungsstufe von GV
- L: Langsamfahrstufe von GP
- n: Drehzahl
- N: Neutralstellung
- n_{GA}: Drehzahl von W_{GA}
- n_{GE}: Drehzahl von W_{GE}
- n_{H}: Drehzahl von W_{H}
- n_{M}: Drehzahl des Antriebsmotors
- n_{VG}: Drehzahl von W_{VG1}, W_{VG}
- PH: Hohlrad von GP
- PS: Sonnenrad von GP
- PT: Planetenträger von GP
- R: Rückwärts-Übersetzungsstufe von HG
- R': Rückwärts-Übersetzungsstufe von HG'
- S: Schnellfahrstufe von GP
- SP: Schaltpaket von GP
- S1: Erstes Schaltpaket von HG
- S1': Erstes Schaltpaket von HG'
- S2: Zweites Schaltpaket von HG'
- S2': Zweites Schaltpaket von HG
- S3': Drittes Schaltpaket von HG'
- SV: Schaltpaket von GV
- SH1 - SH7b: Verfahrensschritte
- t: Zeit
- t0 - t8: Zeitpunkte
- W_{GA}: Ausgangswelle
- W_{GE}: Eingangswelle
- W_{H}: Hauptwelle
- W_{VG}: Vorgelegewelle von HG'
- W_{VG1}: Erste Vorgelegewelle von HG
- W_{VG2}: Zweite Vorgelegewelle von HG

## Patentansprüche

1. Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe (HG, HG') sowie eine diesem nachgeschaltete zweistufige Bereichsgruppe (GP) umfasst, und bei dem das Hauptgetriebe (HG, HG') in Vorgelegebauweise mit mindestens einer mit einer steuerbaren Getriebebremse (Br) versehenen Vorgelegewelle (W_{VG1}, W_{VG}) ausgeführt ist, die Eingangswelle (W_{GE}) über eine steuerbare Trennkupplung (K) mit dem Antriebsmotor in Verbindung steht, und das Hauptgetriebe (HG, HG') sowie die Bereichsgruppe (GP) jeweils über paarweise in einem gemeinsamen Schaltpaket (S1, S2, S1' - S3', SP) mit zwei Schaltstellungen und einer Neutralstellung (N) zusammengefasste unsynchronisierte Klauenkupplungen schaltbar sind, wobei bei einer Bereichsschaltung sowohl in dem Hauptgetriebe (HG, HG') als auch in der Bereichsgruppe (GP) jeweils ein Wechsel zwischen zwei Übersetzungsstufen erfolgt, wobei bei einer Bereichshochschaltung das Hauptgetriebe (HG, HG') von der höchsten Übersetzungsstufe (G3, G4') in die niedrigste Übersetzungsstufe (G1, G1') zurückgeschaltet wird und die Bereichsgruppe (GP) von der Langsamfahrstufe L in die Schnellfahrstufe S hochgeschaltet wird, wobei bei dieser Bereichhochschaltung die Schritte in der folgenden Reihenfolge durchgeführt werden:
| | |
|---|---|
| SH1) | Lastabbau des Antriebsmotors, |
| SH2a) | Auslegen der Ist-Übersetzungsstufe (L) der Bereichsgruppe (GP = N) und |
| SH2b) | vollständiges Ausrücken der Trennkupplung (K = 0), etwa gleichzeitig mit dem Verfahrensschnitt SH2a, |
| SH3) | Beginn der Steuerung des Antriebsmotors auf die Zieldrehzahl der Eingangswelle (W_{GE}), |
| SH4) | Synchronisieren der Eingangswelle (W_{GE}) auf die Zieldrehzahl durch eine Betätigung der Getriebebremse (Br > 0), parallel zum Verfahrensschnitt SH3, |
| SH5) | Auslegen der Ist-Übersetzungsstufe des Hauptgetriebes (HG = N), |
| SH6a) | Einlegen der Ziel-Übersetzungsstufe des Hauptgetriebes (HG) und |
| SH6b) | Einlegen der Ziel-Übersetzungsstufe (S) der Bereichsgruppe (GP), |
| SH7a) | Vollständiges Einrücken der Trennkupplung (K = 1) und |
| SH7b) | Lastaufbau des Antriebsmotors. |

2. Verfahren nach Anspruch 1, **dadurch gekennzeichnet, dass** bei einem Hauptgetriebe (HG, HG'), bei dem die niedrigste Übersetzungsstufe (G1, G1') und die höchste Übersetzungsstufe (G3, G4') unterschiedlichen Schaltgassen zugeordnet sind, die erforderliche Umschaltung des Hauptgetriebes (HG, HG') auf die Schaltgasse der Ziel-Übersetzungsstufe unmittelbar nach dem Auslegen der Ist-Übersetzungsstufe (G3, G4') des Hauptgetriebes (HG, HG'; SH5) und vor dem Einlegen der Ziel-Übersetzungsstufen (G1, G1'; S) des Hauptgetriebes (HG, HG') und der Bereichsgruppe (GP; SH6a, SH6b) erfolgt.

3. Verfahren nach Anspruch 1 oder 2, **dadurch gekennzeichnet , dass** bei einer Bereichshochschaltung, die eine Umschaltung einer dem Hauptgetriebe (HG) vorgeschalteten, synchronisiert schaltbaren zweistufigen Splitgruppe (GV) beinhaltet, die Umschaltung der Splitgruppe (GV) nach dem Auslegen der Ist-Übersetzungsstufe (L) der Bereichsgruppe (GP; SH2a) erfolgt.

4. Verfahren nach einem der Ansprüche 1 bis 3, **dadurch gekennzeichnet, dass** während des Lastabbaus des Antriebsmotors (SH1) die Trennkupplung (K) schon teilweise bis oberhalb der Schlupfgrenze ausgerückt wird.

5. Verfahren nach einem der Ansprüche 1 bis 4, **dadurch gekennzeichnet, dass** bei einer Ermittlung einer beim Einlegen der Ziel-Übersetzungsstufe (G1, G1', S) des Hauptgetriebes (HG, HG'; SH6a) und/oder der Bereichsgruppe (GP; SH6b) auftretenden Zahn-auf-Zahn-Stellung der betreffenden Klauenkupplung der Schaltungsablauf unter Aufrechterhaltung der betreffenden Einrückungsstellkraft fortgesetzt wird.

6. Verfahren nach einem der Ansprüche 1 bis 5, **dadurch gekennzeichnet, dass** dieses bei einem Gruppengetriebe verwendet wird, das zumindest ein synchronisiertes Teilgetriebe (HG, GP; HG', GP) aufweist.

## Claims

1. Method for shift control of an automated auxiliary transmission which is arranged in a drivetrain of a motor vehicle between a drive engine and axle drive and comprises at least one multi-stage main transmission (HG, HG') and a two-stage range group (GP) arranged downstream of the latter, and in which the main transmission (HG, HG') is of countershaft design with at least one countershaft (W_{VG1}, W_{VG}) provided with a controllable transmission brake (Br), the input shaft (W_{GE}) is connected via a controllable separating clutch (K) to the drive engine, and the main transmission (HG, HG') and the range group (GP) can in each case be switched by means of unsynchronized claw clutches combined in pairs in a common shift packet (S1, S2, S1' - S3', SP) with two shift positions and a neutral position (N), wherein in the case of a range shift in each case a change between two transmission ratios is carried out in the main transmission (HG, HG') and also in the range group (GP), wherein in the case of a range upshift the main transmission (HG, HG') is shifted back from the highest transmission ratio (G3, G4') into the lowest transmission ratio (G1, G1') and the range group (GP) is shifted up from the slow drive position L into the fast drive position S, wherein in the case of this range upshift the steps are carried out in the following sequence:
| | |
|---|---|
| SH1) | Reduction in load of the drive engine, |
| SH2a) | Disengagement of the current transmission ratio (L) of the range group (GP = N) and |
| SH2b) | Complete disengagement of the separating clutch (K = 0), approximately simultaneously with method step SH2a, |
| SH3) | Start of control of the drive engine to the target rotational speed of the input shaft (W_{GE}), |
| SH4) | Synchronization of the input shaft (W_{GE}) to the target rotational speed by an activation of the transmission brake (Br > 0), parallel to method step SH3, |
| SH5) | Disengagement of the current transmission ratio of the main transmission (HG = N), |
| SH6a) | Engagement of the target transmission ratio of the main transmission (HG) and |
| SH6b) | Engagement of the target transmission ratio (S) of the range group (GP), |
| SH7a) | Complete engagement of the separating clutch (K = 1) and |
| SH7b) | Build up of load of the drive engine. |

2. Method according to Claim 1, **characterized in that**, in the case of a main transmission (HG, HG') in which the lowest transmission ratio (G1, G1') and the highest transmission ratio (G3, G4') are assigned to different shift gates, the required switching of the main transmission (HG, HG') to the shift gate of the target transmission ratio is carried out immediately after the disengagement of the current transmission ratio (G3, G4') of the main transmission (HG, HG' ; SH5) and before the engagement of the target transmission ratios (G1, G1'; S) of the main transmission (HG, HG') and of the range group (GP; SH6a, SH6b).

3. Method according to Claim 1 or 2, **characterized in that**, in the case of a range upshift which contains a switching of a two-stage split group (GV), which is arranged downstream of the main transmission (HG) and can be shifted in a synchronized manner, the switching of the split group (GV) is carried out after the disengagement of the current transmission ratio (L) of the range group (GP; SH2a).

4. Method according to one of Claims 1 to 3, **characterized in that** during the reduction in load of the drive engine (SH1) the separating clutch (K) is already at least partially disengaged until above the slip threshold.

5. Method according to one of Claims 1 to 4, **characterized in that**, in the case of a determination of a tooth-on-tooth position of the relevant claw clutch which occurs during engagement of the target transmission ratio (G1, G1', S) of the main transmission (HG, HG'; SH6a) and/or of the range group (GP; SH6b), the shift procedure is continued while maintaining the relevant engagement actuating force.

6. Method according to one of Claims 1 to 5, **characterized in that** said method is used in the case of an auxiliary transmission which has at least one synchronized partial transmission (HG, GP; HG', GP).

## Revendications

1. Procédé de commande de changement de vitesse d'une boîte de vitesses à plusieurs groupes automatisée disposée dans une chaîne de transmission de véhicule automobile entre un moteur d'entraînement et un entraînement d'essieu et comprenant au moins une boîte de vitesses principale (HG, HG') à plusieurs étages ainsi qu'un groupe-relais (GP) à deux étages connecté en aval par rapport à elle et dans lequel la boîte de vitesses principale (HG, HG') est réalisée avec intermédiaire par le biais d'au moins un arbre intermédiaire (W_{VG1}, W_{VG}) pourvu d'un frein de boîte de vitesses (Br) commandable, l'arbre d'entrée (W_{GE}) étant relié au moteur d'entraînement par le biais d'un embrayage de coupure (K) commandable et la boîte de vitesses principale (HG, HG') ainsi que le groupe-relais (GP) pouvant respectivement être connectés par le biais d'embrayages à griffes non synchronisés réunis de façon appariée en un paquet de changement de vitesse (S1, S2, S1' - S3', SP) commun avec deux positions de changement de vitesse et une position neutre (N), une inversion entre deux étages de réduction se produisant respectivement en cas de changement de vitesse relais tant dans la boîte de vitesses principale (HG, HG') que dans le groupe-relais (GP), la boîte de vitesses principale (HG, HG') étant ramenée de l'étage de réduction (G3, G4') le plus élevé à l'étage de réduction (G1, G1') le plus bas en cas de changement de vitesse relais vers une vitesse supérieure et le groupe-relais (GP) étant connecté de façon montante de l'étage de marche lente L vers l'étage de marche rapide S, les étapes suivies en présence de ce changement de vitesse relais vers une vitesse supérieure étant réalisées dans l'ordre suivant :
SH1) sortie de charge du moteur d'entraînement ;
SH2a) désengagement de l'étage de réduction réel (L) du groupe relais (GP = N) ; et
SH2b) débrayage total de l'embrayage de coupure (K = 0), approximativement simultanément avec l'étape de procédé SH2a ;
SH3) début de la commande du moteur d'entraînement pour atteindre la vitesse de rotation cible de l'arbre d'entrée (W_{GE}) ;
SH4) synchronisation de l'arbre d'entrée (W_{GE}) sur la vitesse de rotation cible par un actionnement du frein de boîte de vitesses (Br > 0), parallèlement à l'étape de procédé SH3 ;
SH5) désengagement de l'étage de réduction réel de la boîte de vitesses principale (HG = N) ;
SH6a) engagement de l'étage de réduction cible de la boîte de vitesses principale (HG) ; et
SH6b) engagement de l'étage de réduction cible (S) du groupe relais (GP) ;
SH7a) embrayage total de l'embrayage de coupure (K = 1) ; et
SH7b) mise en charge du moteur d'entraînement.

2. Procédé selon la revendication 1, **caractérisé en ce qu'**en présence d'une boîte de vitesses principale (HG, HG') dans laquelle l'étage de réduction (G1, G1') inférieur et l'étage de réduction (G3, G4') supérieur sont associés à différents tronçons de changement de vitesse, la commutation nécessaire de la boîte de vitesses principale (HG, HG') vers le tronçon de changement de vitesse de l'étage de réduction cible se produit directement après le désengagement de l'étage de réduction réel (G3, G4') de la boîte de vitesses principale (HG, HG' ; SH5) et avant l'engagement des étages de réduction cibles (G1, G1' ; S) de la boîte de vitesses principale (HG, HG') et du groupe relais (GP ; SH6a, SH6b).

3. Procédé selon la revendication 1 ou 2, **caractérisé en ce qu'**en cas de changement de vitesse relais vers une vitesse supérieure contenant une commutation d'un groupe de coupure (GV) à deux étages connecté en amont de la boîte de vitesses principale (HG) et permettant un changement de vitesse synchronisé, la commutation du groupe de coupure (GV) se produit après le désengagement de l'étage de réduction réel (L) du groupe relais (GP ; SH2a).

4. Procédé selon l'une quelconque des revendications 1 à 3, **caractérisé en ce que** pendant la sortie de charge du moteur d'entraînement (SH1), l'embrayage de coupure (K) est déjà en partie débrayé au-delà de la limite de glissement.

5. Procédé selon l'une quelconque des revendications 1 à 4, **caractérisé en ce qu'**en cas de calcul d'une position dent sur dent de l'embrayage à griffes concerné survenant lors de l'engagement de l'étage de réduction cible (G1, G1', S) de la boîte de vitesses principale (HG, HG' ; SH6a) et/ou du groupe relais (GP ; SH6b), le déroulement du changement de vitesse se poursuit en maintenant la force de mise en place du débrayage concernée.

6. Procédé selon l'une quelconque des revendications 1 à 5, **caractérisé en ce qu'**il est utilisé dans une boîte de vitesses à plusieurs groupes comportant au moins une boîte de vitesses relais (HG, GP ; HG', GP) synchronisée.
